# EUROPEAN PATENT APPLICATION

(11) **EP 4 123 779 A1**
(43) Date of publication of application: **25.01.2023**
(21) Application number: 21770987.2
(22) Date of filing: 08.02.2021
(51) Int. Cl.: H01M 10/05, H01M 10/0587, H01M 50/531, H01M 50/572

(54) **NON-AQUEOUS ELECTROLYTE SECONDARY BATTERY**

(30) Priority: 19.03.2020 JP 2020049779
(71) Applicant: SANYO Electric Co., Ltd., Daito-shi Osaka 574-8534 (JP)
(72) Inventor: YAMADA Tomoyuki, Chuo-ku, Osaka-shi, Osaka 540-6207 (JP); HOSOKAWA Takashi, Chuo-ku, Osaka-shi, Osaka 540-6207 (JP)
(74) Representative: Novagraaf International SA
(86) International application number: PCT/JP2021/004629
(87) International publication number: WO 2021/186948

(57) **Abstract**

A non-aqueous electrolyte secondary battery includes an electrode body having a positive electrode plate and a negative electrode plate stacked with a separator interposed therebetween, a rectangular exterior body accommodating the electrode body, a sealing plate, an electrode terminal provided to the sealing plate, a first current collector in connection with the electrode terminal between the electrode body and the sealing plate, a second current collector in connection with the first current collector between the electrode body and a side wall of the rectangular exterior body, and a tab group extending from the electrode body toward the side wall and connected to the second current collector. The tab group includes a positive electrode tab group/negative electrode tab group having a bundle of multiple positive electrode tabs/negative electrode tabs extending from the positive electrode plate/negative electrode plate, and is bent near a connection with the second current collector to be parallel to the side wall. The positive electrode plate includes a positive electrode core and a positive electrode active material applied to the positive electrode core, the positive electrode tabs extend from the positive electrode core, a surface of the positive electrode core on and near its end from which the positive electrode tabs extend is covered with a protective layer, and the protective layer is exposed. One end of the negative electrode plate faces the protective layer on the positive electrode plate.

## Description

### TECHNICAL FIELD

The present disclosure relates to a non-aqueous electrolyte secondary battery.

### BACKGROUND ART

A non-aqueous electrolyte secondary battery such as a lithium ion battery has a structure in which an electrode body is accommodated in an exterior body having an opening and the opening is sealed with a sealing plate. The electrode body has a structure in which a positive electrode and a negative electrode are stacked with a separator interposed therebetween.

For example, Patent Document 1 discloses an electrode body having a structure in which multiple positive electrode plates and multiple negative electrode plates are stacked with separators interposed therebetween, and an electrode body in which a long positive electrode plate and a long negative electrode plate are stacked and wound with a long separator interposed therebetween. In the electrode body having the structure in which the multiple positive electrode plates and the multiple negative electrode plates are stacked with the separators interposed therebetween, positive electrode tabs for current collection extend from the positive electrode plates, and negative electrode tabs for current collection extend from the negative electrode plates. In the wound electrode body, multiple positive electrode tabs extend from the long positive electrode plate, and multiple negative electrode tabs extend from the long negative electrode plate. By winding, the multiple positive electrode tabs are arranged to face each other, and the multiple negative electrode tabs are also arranged to face each other. Patent Document 2 also discloses an electrode body having a structure in which multiple positive electrode plates and multiple negative electrode plates are stacked with separators interposed therebetween. Positive electrode tabs extend from the positive electrode plates, and negative electrode tabs extend from the negative electrode plates.

All types of batteries are designed such that an active material in the negative electrode has a greater capacity than an active material in the positive electrode, and batteries in which the positive electrode plate and the negative electrode plate are stacked to face each other are designed such that the area of the positive electrode plate to which the active material is applied falls within the area of the negative electrode plate to which the active material is applied and the area to which the negative electrode active material is applied is larger than (extends beyond) the area to which the positive electrode active material is applied. In order to increase the capacity of the battery as much as possible, the area to which the positive electrode active material is applied and the area to which the negative electrode active material is applied are designed to be as large as possible.

### CITATION LIST

### PATENT DOCUMENTS

PATENT DOCUMENT 1: Japanese Unexamined Patent Publication No. 2013-175407
PATENT DOCUMENT 2: Chinese Patent No. 100590927

### SUMMARY OF THE INVENTION

In a battery in which tabs for current collection are formed on a positive electrode plate and a negative electrode plate as disclosed in Patent Documents 1 and 2, burrs may be generated when the tabs are formed by cutting parts of the positive electrode plate and the negative electrode plate. In particular, burrs are likely to be generated when corner portions are formed, and the bases of the tabs are assumed to be portions where burrs are likely to be generated.

However, if the positive electrode plate is designed so that the area of the positive electrode plate to which the positive electrode active material is applied is as large as possible in order to increase the battery capacity, the bases of the positive electrode tabs may be overlaid on the negative electrode plate. Although the positive electrode tabs are separated from the negative electrode plate by the separator, the following problem may occur when the burrs, which are metal, are generated at the bases of the positive electrode tabs. The burrs may break the separator, come into contact with the negative electrode plate, and cause short-circuit.

A non-aqueous electrolyte secondary battery according to the present disclosure includes an electrode body including a positive electrode plate and a negative electrode plate, a rectangular exterior body having an opening and accommodating the electrode body, a sealing plate sealing the opening, an electrode terminal provided to the sealing plate, a first current collector disposed between the electrode body and the sealing plate and connected to the electrode terminal, a second current collector disposed between the electrode body and a side wall of the rectangular exterior body and connected to the first current collector, and a tab group extending from the electrode body toward the side wall and connected to the second current collector. The second current collector is made of a flat plate having a surface parallel to the side wall. The tab group includes a positive electrode tab group having a bundle of multiple positive electrode tabs extending from the positive electrode plate and a negative electrode tab group having a bundle of multiple negative electrode tabs extending from the negative electrode plate, and is bent near a connection with the second current collector to be parallel to the side wall. The positive electrode plate includes a positive electrode core and a positive electrode active material applied to the positive electrode core, the positive electrode tabs extend from the positive electrode core, a surface of the positive electrode core on and near its end from which the positive electrode tabs extend is covered with a protective layer containing an insulant, and the protective layer is exposed. The positive electrode plate and the negative electrode plate in the electrode body are stacked with a separator interposed therebetween. One end of the negative electrode plate faces the protective layer on the positive electrode plate.

The positive electrode tab group is located on one end surface of the electrode body, and the negative electrode tab group is located on the other end surface of the electrode body.

In a preferred embodiment, the end of the protective layer and one end of the negative electrode plate are spaced at least 0.1 mm apart in plan view.

The positive electrode tabs are partially provided with the protective layer.

The insulant includes an inorganic oxide.

In the non-aqueous electrolyte secondary battery according to the present disclosure, the end portion of the positive electrode plate on the side on which the positive electrode tabs extend is covered with the protective layer, and the end of the negative electrode plate faces the protective layer. This ensures a high safety.

### BRIEF DESCRIPTION OF THE DRAWINGS

FIG. 1 is a perspective view showing a non-aqueous electrolyte secondary battery according to an embodiment of the present disclosure.
FIG. 2 is a sectional view of the battery of FIG. 1.
FIG. 3 is a view showing a second current collector according to the embodiment of the present disclosure.
FIG. 4 is a plan view of a positive electrode plate according to the embodiment of the present disclosure.
FIG. 5 is a plan view of a negative electrode plate according to the embodiment of the present disclosure.
FIG. 6 is a plan view of an electrode body according to the embodiment of the present disclosure.
FIG. 7 is a schematic view showing a positional relationship among the positive electrode plate, the negative electrode plate, and a separator according to the embodiment of the present disclosure.
FIG. 8 is a schematic view showing a positional relationship among a positive electrode plate, a negative electrode plate, and a separator according to a comparative configuration.
FIG. 9 is a view showing the vicinity of a connection between a second current collector and a tab group before bending the tab group.
FIG. 10 is a view showing the vicinity of the connection between the second current collector and the tab group after bending the tab group.
FIG. 11 is a perspective view showing an electrode body where tab groups are connected to second current collectors before bending the tab groups.
FIG. 12 is a view showing an electrode body group including multiple electrode bodies.
FIG. 13 is a view showing the electrode body group and the sealing plate connected to each other with a first current collector and second current collectors.

### DESCRIPTION OF EMBODIMENTS

Embodiments of the present disclosure are described below in detail with reference to the drawings. The following description of advantageous embodiments is a mere example in nature, and is not at all intended to limit the scope, application, or use of the present disclosure. For the sake of simple description, constituting elements having substantially the same functions are given the same reference characters in the following drawings.

### <Overall Configuration of Battery>

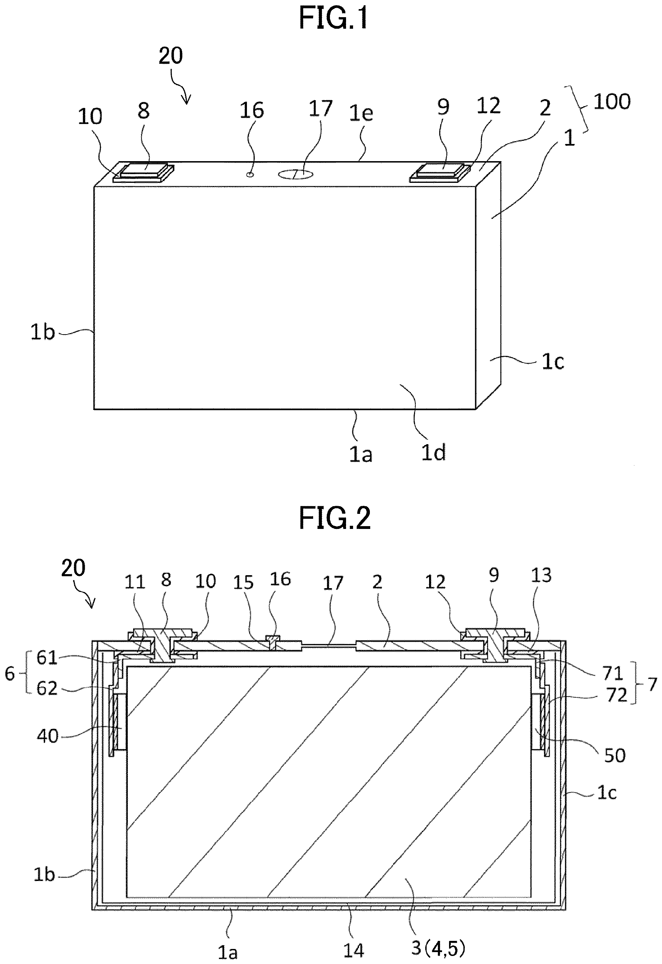

FIG. 1 is a perspective view of a non-aqueous electrolyte secondary battery according to the present disclosure. FIG. 2 is a sectional view of the battery of FIG. 1, taken along a line parallel to the plane of paper. As shown in FIGS. 1 and 2, a non-aqueous electrolyte secondary battery 20 includes a battery case 100 having a rectangular exterior body 1 having an opening and a bottomed rectangular tube shape and a sealing plate 2 sealing the opening of the rectangular exterior body 1.

The rectangular exterior body 1 has a bottom 1a, a pair of first side walls 1b and 1c, and a pair of second side walls 1d and 1e. The first side walls 1b and 1c in pair are disposed to face each other. The second side walls 1d and 1e in pair are disposed to face each other. The pair of first side walls 1b and 1c is perpendicular to the longitudinal direction of the sealing plate 2, and the area of the pair of first side walls 1b and 1c is smaller than that of the pair of second side walls 1d and 1e.

In the rectangular exterior body 1, an electrode body 3 including a positive electrode plate 4 and a negative electrode plate 5 is accommodated together with an electrolyte. In the present embodiment, the electrode body 3 is a flat electrode body in which the positive electrode plate 4 and the negative electrode plate 5 are wound with a separator interposed therebetween. The winding axis of the electrode body 3 extends perpendicularly to the first side walls 1b and 1c and parallel to the second side walls 1d and 1e. The electrode body 3 is not limited to the wound electrode body, and may be, for example, a stacked electrode body in which multiple positive electrode plates 4 and multiple negative electrode plates 5 are stacked with separators interposed therebetween.

In FIG. 2, reference numeral 10 denotes an external insulating member disposed between the sealing plate 2 and a positive electrode terminal 8, and reference numeral 12 denotes an external insulating member disposed between the sealing plate 2 and a negative electrode terminal 9. Reference numeral 11 denotes an inner insulating member disposed between the sealing plate 2 and a first positive electrode current collector 61, and reference numeral 13 denotes an inner insulating member disposed between the sealing plate 2 and a first negative electrode current collector 71. Reference numeral 14 denotes a box-shaped or bag-shaped insulating sheet which is disposed inside the rectangular exterior body 1 and accommodates the electrode body 3. Reference numeral 15 denotes an electrolyte injection hole provided in the sealing plate 2. Reference numeral 16 denotes a sealing member sealing the electrolyte injection hole 15. Reference numeral 17 denotes a gas discharge valve provided in the sealing plate 2.

In the non-aqueous electrolyte secondary battery 20, one side is a positive electrode side and the other side is a negative electrode side in a direction in which the winding axis of the electrode body 3 extends. The positive electrode side is mainly described below, and description of the negative electrode side may be omitted.

### <Configuration of Electrode Body>

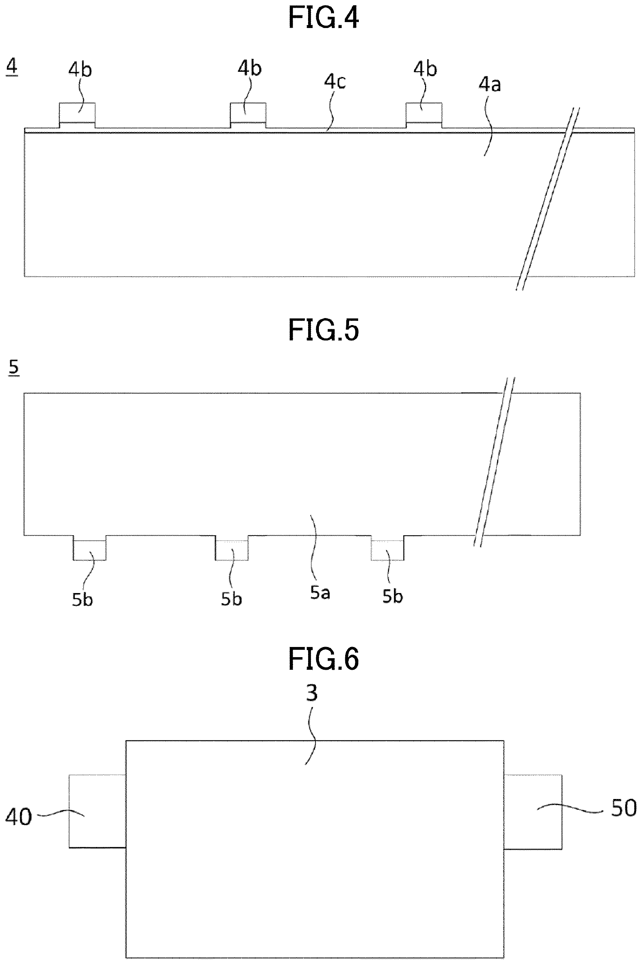

As shown in FIG. 4, the positive electrode plate 4 has a long strip-like shape, and has a region in which a positive electrode active material layer 4a is formed on each surface of a positive electrode core (e.g., an aluminum foil). Multiple positive electrode tabs 4b extend in a raised shape from one end of the positive electrode core in the lateral direction of the positive electrode plate 4. The surface of the positive electrode core on and near the one end in the lateral direction of the positive electrode plate 4 is covered with a protective layer 4c. In other words, the protective layer 4c is provided with a constant width from one side (end) extending in the longitudinal direction of the positive electrode plate 4 toward the longitudinal center axis of the positive electrode plate 4. The protective layer is also provided at the base of each positive electrode tab 4b. The protective layer 4c contains an insulant, and may be, for example, an insulating layer made of resin or a layer containing ceramic, which is an inorganic oxide, and a resin binder. The protective layer 4c can be, for example, a layer containing an alumina powder, a carbon material as an electroconductive material, and polyvinylidene fluoride as a binder.

As shown in FIG. 5, the negative electrode plate 5 has a long strip-like shape, and has a region in which a negative electrode active material layer 5a is formed on each surface of a negative electrode core (e.g., a copper foil). Multiple negative electrode tabs 5b extend in a raised shape from one end of the negative electrode core in the lateral direction of the negative electrode plate 5.

As shown in FIG. 6, the positive electrode plate 4 and the negative electrode plate 5 are stacked with the separator interposed therebetween and wound to form the electrode body 3. In the electrode body 3, the winding axis extends in a direction (the lateral direction in FIG. 6) connecting a positive electrode tab group 40 and a negative electrode tab group 50, and the positive electrode tab group 40 is located on one end surface of the electrode body 3 perpendicular to the winding axis and the negative electrode tab group 50 is located on the other end surface opposite to the one end surface. Such a positional relationship easily prevents or reduces short-circuit in the battery.

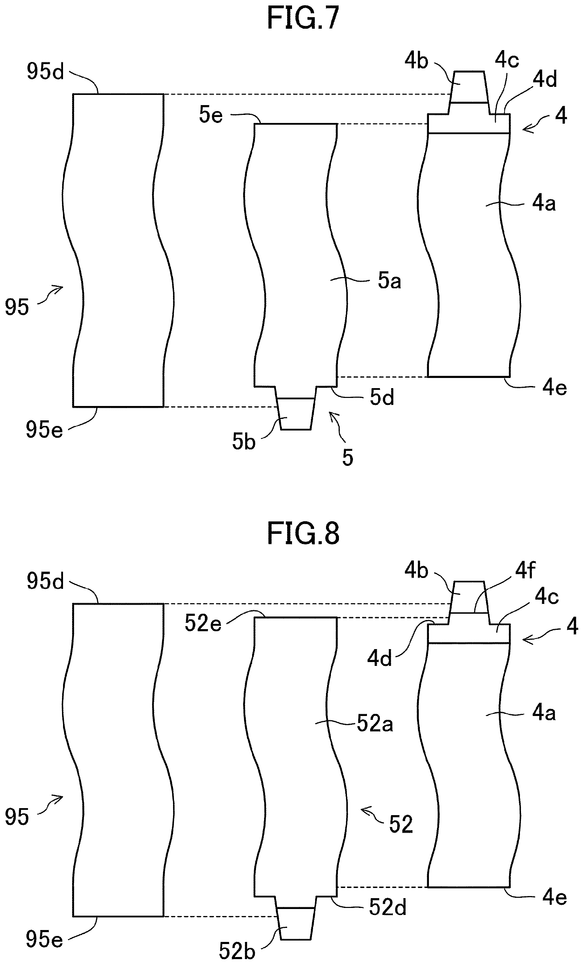

Next, a positional relationship between the positive electrode plate 4 and the negative electrode plate 5 in the electrode body 3 is described with reference to FIGS. 7 and 8. FIG. 7 is a schematic view showing a positional relationship among the positive electrode plate 4, the negative electrode plate 5, and a separator 95 in the present embodiment, and FIG. 8 is a similar view showing a positional relationship among the positive electrode plate 4, a negative electrode plate 52, and the separator 95 in a comparative configuration.

As described in the Background Art, in general, a battery having a structure in which a positive electrode plate and a negative electrode plate are stacked on each other is designed such that the area of the positive electrode plate to which an active material is applied always falls within the area of the negative electrode plate to which an active material is applied, and an area to which the negative electrode active material is applied is larger than (extends beyond) an area to which the positive electrode active material is applied. In such a design, in order to ensure that the area to which the negative electrode active material is applied is larger than the area to which the positive electrode active material is applied, it was common to dispose the opposite end (one end) 52e of the negative electrode plate 52 to the end 52d from which the negative electrode tab 52b extends to be located outside the end 4d of the positive electrode plate 4 from which the positive electrode tab 4b extends (the end of the protective layer 4c on the positive electrode plate 4), as shown in FIG. 8. As a result, it is reliably set such that even when the position of the one end 52e of the negative electrode plate 52 is slightly displaced with respect to the positive electrode plate 4 during a manufacturing process (winding process), the area to which the negative electrode active material is applied is larger than the area to which the positive electrode active material is applied.

The same protective layer 4c as that provided on the positive electrode plate 4 is also provided at the base of each positive electrode tab 4b, and in FIG. 8, one end 52e of the negative electrode plate 52 is located between the upper end 4f of the protective layer provided on the positive electrode tab 4b and the end 4d of the positive electrode plate 4. One end 95e of the separator 95 faces the negative electrode tabs 52b of the negative electrode plate 52, the other end 95d faces the positive electrode tab 4b of the positive electrode plate 4, and the separator 95 entirely covers the positive electrode active material layer 4a and the negative electrode active material layer 52a.

However, as position control during winding has improved, the above-described settings have become overly safety sensitive in terms of positional accuracy in the manufacturing process, but design conditions related to safety have not been easily revised. In the formed positive electrode tabs, the bases of the tabs are corner portions where burrs are likely to be generated. Thus, there is a problem that the burrs, which are made from the positive electrode core and generated at the bases of the positive electrode tabs 4b, break the separator 95, come into contact with the negative electrode plate 52, and cause short-circuit.

Therefore, in the present embodiment, as shown in FIG. 7, the position of one end 5e of the negative electrode plate 5 is changed to the inside of the corresponding end (end of the protective layer 4c) 4d of the positive electrode plate 4 so as to face the protective layer 4c of the positive electrode plate 4. With such a positional relationship, even if burrs are present at the bases of the positive electrode tabs, the negative electrode plate 5 is not present at a position facing the burrs, and short-circuit due to the burrs does not occur. In a preferred embodiment, when the wound electrode body 3 is formed by stacking the positive electrode plate 4 and the negative electrode plate 5 with the separator 95 interposed therebetween, the distance between an end 4d which is an end of the protective layer 4c on the positive electrode plate 4 and one end 5e of the negative electrode plate 5 is 0.1 mm or more in plan view (when viewed perpendicularly to the surfaces of the positive electrode plate 4 and the negative electrode plate 5). As a result, short-circuit due to burrs can be reliably prevented or reduced. In a more-preferred embodiment, the distance is set to 0.15 mm or more because short-circuit can be more reliably prevented or reduced.

The comparative configuration shown in FIG. 8 differs from the present embodiment shown in FIG. 7 only in the position of one end 5e, 52e of the negative electrode plate 5, 52; otherwise, the configuration and the structure are the same.

### <Structure of Current Collection from Electrode Body>

The sealing plate 2 is provided with the positive electrode terminal 8 and the negative electrode terminal 9 as electrode terminals to the outside. The positive electrode terminal 8 is electrically connected to the positive electrode tab group 40 with the positive electrode current collector 6 interposed therebetween. The positive electrode current collector 6 includes a first positive electrode current collector 61 and a second positive electrode current collector 62. The negative electrode terminal 9 is electrically connected to the negative electrode tab group 50 with the negative electrode current collector 7 interposed therebetween. The negative electrode current collector 7 includes a first negative electrode current collector 71 and a second negative electrode current collector 72.

The first positive electrode current collector 61 has a substantially L-shaped cross section and is disposed between the electrode body 3 and the sealing plate 2. Specifically, the first positive electrode current collector 61 has a first region disposed along the sealing plate 2 and a second region bent from an end of the first region. The second region extends along the first side wall 1b toward the bottom 1a. The first positive electrode current collector 61 is in connection with the positive electrode terminal 8. The negative electrode side has a similar configuration.

The second positive electrode current collector 62 is disposed between the electrode body 3 and the first side wall 1b of the rectangular exterior body 1. Specifically, the second positive electrode current collector 62 is made of a flat plate having a surface parallel to the first side wall 1b, and extends along the first side wall 1b toward the bottom 1a. The second positive electrode current collector 62 is in connection with the first positive electrode current collector 61. The negative electrode side has a similar configuration.

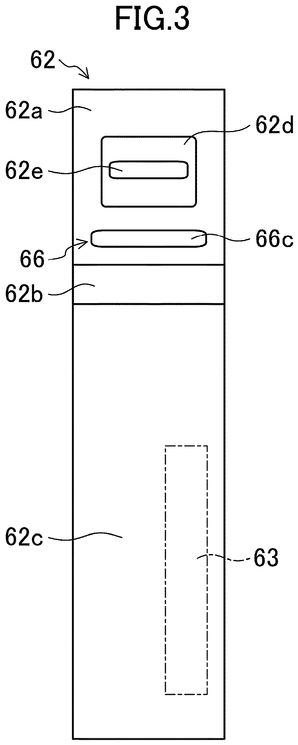

FIG. 3 shows the second positive electrode current collector 62. The second positive electrode current collector 62 has a structure in which a substantially rectangular flat plate is partially bent, and includes a current collector connector 62a, an inclined portion 62b, and a tab connector 62c. The current collector connector 62a is connected to the first positive electrode current collector 61. The positive electrode tab group 40 is connected to the tab connector 62c. The inclined portion 62b connects the current collector connector 62a and the tab connector 62c, and is inclined with respect to both of these connectors.

The current collector connector 62a is provided with a recess 62d. The recess 62d has a through hole 62e. In the recess 62d, the current collector connector 62a is joined to the first positive electrode current collector 61. The second positive electrode current collector 62 is further provided with a fuse 66.

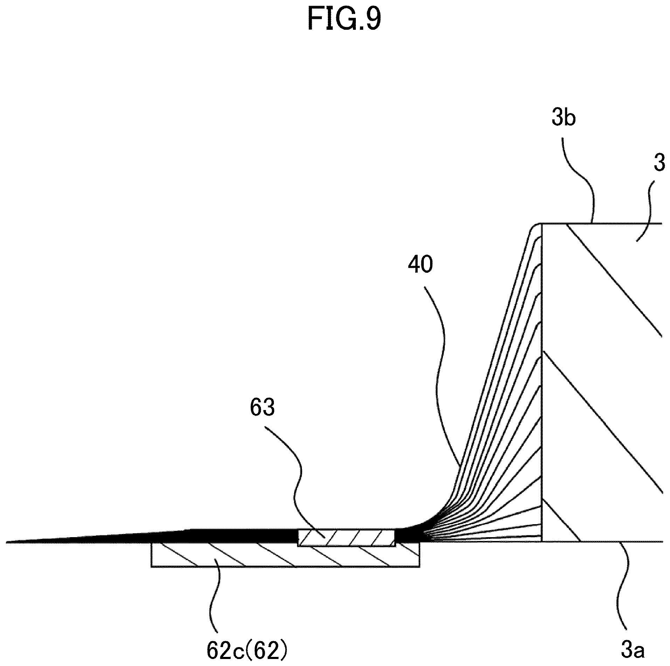

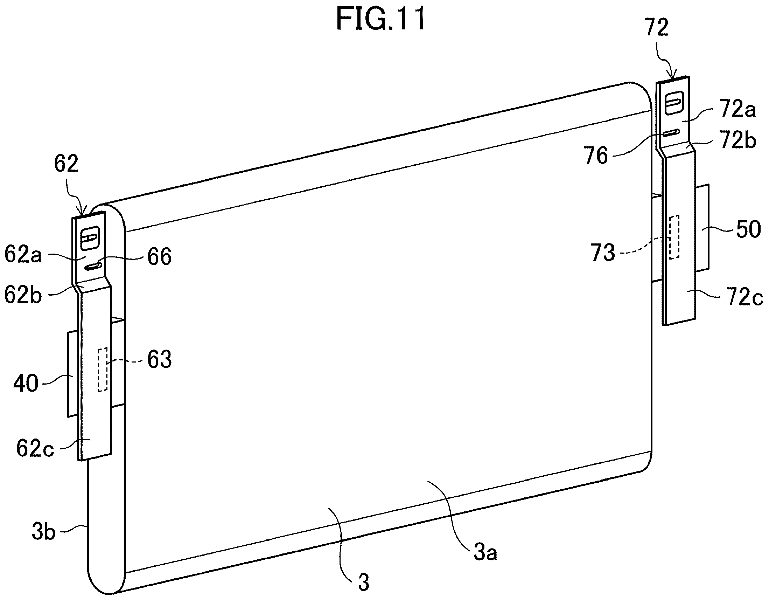

Next, bending of the positive electrode tab group 40 and connection between the positive electrode tab group 40 and the second positive electrode current collector 62 are described. The negative electrode side has substantially the same configuration and structure as the positive electrode side. Thus, only the positive electrode side is described below. FIG. 9 shows the vicinity of the connection between the second positive electrode current collector 62 and the positive electrode tab group 40 before bending the positive electrode tab group 40. FIG. 11 shows the electrode body 3 where the positive electrode tab group 40 is connected to the second positive electrode current collector 62 and the negative electrode tab group 50 is connected to the second negative electrode current collector 72 before bending the positive electrode tab group 40 and the negative electrode tab group 50.

The positive electrode tab group 40 is connected to the tab connector 62c in the second positive electrode current collector 62. Specifically, as shown in FIG. 9, the tab connector 62c and the positive electrode tab group 40 are joined (welded) with the positive electrode tab group 40 disposed on the tab connector 62c of the second positive electrode current collector 62 before bending the positive electrode tab group 40, thereby forming a connection 63.

Here, as shown in FIG. 9, the positive electrode tab group 40 is in connection with the tab connector 62c of the second positive electrode current collector 62 on one side (right side in FIG. 9) in the width direction of the flat plate forming the second positive electrode current collector 62. In other words, the connection 63 between the positive electrode tab group 40 and the tab connector 62c is closer to the base (one side in the width direction, the right side in FIG. 9) of the positive electrode tab group 40 in the width direction of the flat plate. Accordingly, when the positive electrode tab group 40 is bent, a curved shape can be more reliably formed in the vicinity of the base of the positive electrode tab group 40 in a stable manner.

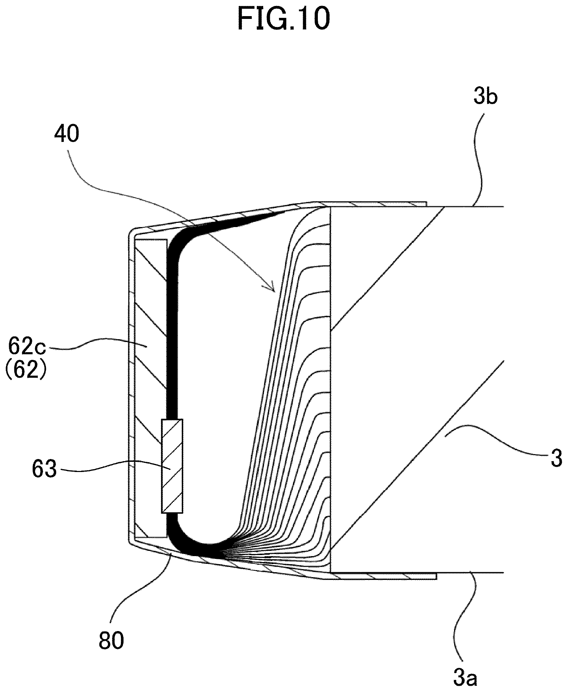

FIG. 10 is a view showing the vicinity of the connection between the second positive electrode current collector 62 and the positive electrode tab group 40 after bending the positive electrode tab group 40. The positive electrode tab group 40 is bent so that the tab connector 62c of the second positive electrode current collector 62 disposed substantially parallel to the first main surface 3a and the second main surface 3b of the electrode body 3 (see FIGS. 9 and 11) is oriented substantially perpendicularly to the winding axis of the electrode body 3. Specifically, the positive electrode tab group 40 is bent near the connection 63 with the second positive electrode current collector 62 to be parallel to the first side wall 1b. The bent positive electrode tab group 40 is fixed to the electrode body 3 with a tape 80.

With such a configuration, the positive electrode tab group 40 can be bent without bending the second positive electrode current collector 62. This enables manufacturing of non-aqueous electrolyte secondary batteries with a high volumetric energy density by a simple method.

As described above, the negative electrode side has a configuration similar to the positive electrode side, and in FIG. 11, reference numeral 72a denotes a current collector connector, reference numeral 72b denotes an inclined portion, and reference numeral 72c denotes a tab connector.

In the non-aqueous electrolyte secondary battery according to the present embodiment, the positive electrode tab group 40 and the negative electrode tab group 50 are bent, which allows the battery to have a high volumetric energy density without bending the second current collectors 62 and 72. One end 5e of the negative electrode plate 5 is disposed to face the protective layer 4c on the positive electrode plate 4, thereby substantially preventing or reducing short-circuit in the battery.

### (Other Embodiments)

The above-described embodiment is a mere example of the present invention. The present invention is not limited to such an example. Instead, the present invention may be a combination of a well-known art, a conventional technique, and a publicly-known technique with the example, and may also have a part of the example replaced. Further, the present invention encompasses any modification easily conceivable by a person skilled in the art.

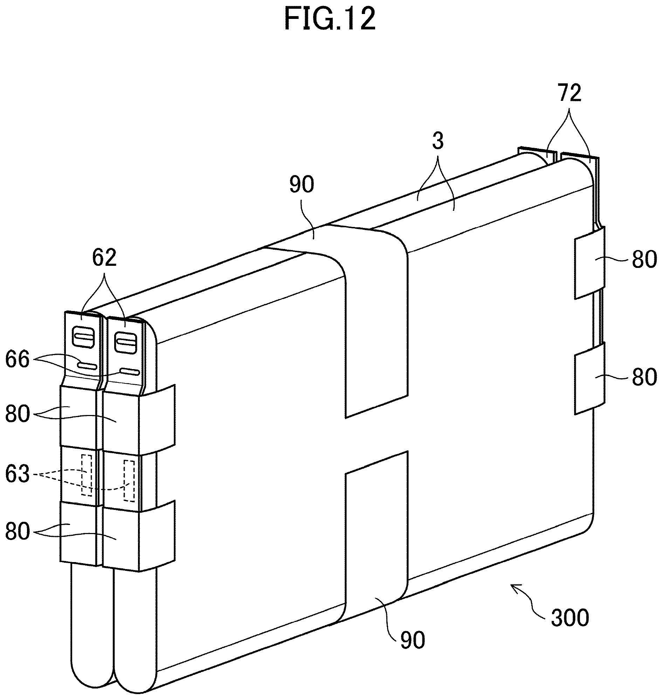

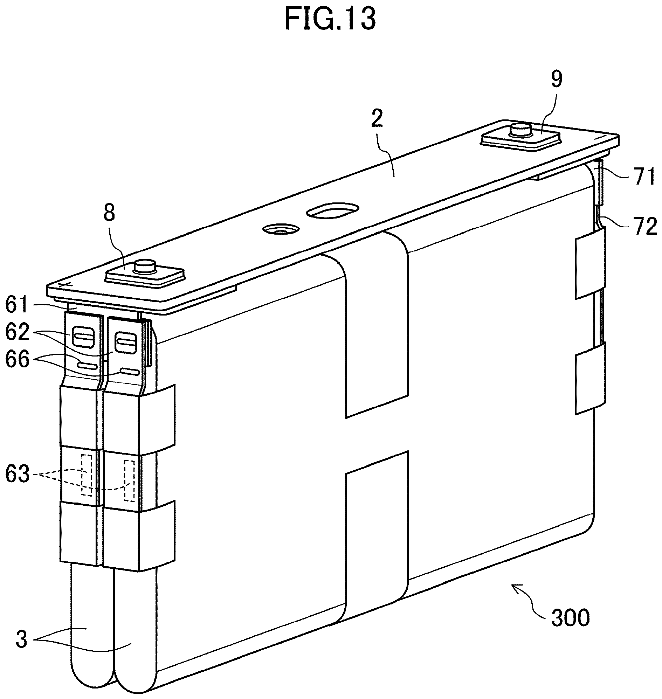

The non-aqueous electrolyte secondary battery 20 may include multiple electrode bodies 3. FIG. 12 is a view showing an electrode body group 300 including the multiple electrode bodies 3. As shown in FIG. 12, the non-aqueous electrolyte secondary battery 20 includes the multiple (two) electrode bodies 3. A second current collector 62 is connected to a positive electrode tab group 40 of each electrode body 3. The multiple electrode bodies 3 and 3 are arranged and fixed together with a tape 90 to form the electrode body group 300. FIG. 13 is a view showing the electrode body group 300 and a sealing plate 2 connected to each other by a first positive electrode current collector 61 and second positive electrode current collectors 62.

### DESCRIPTION OF REFERENCE CHARACTERS

- 1: Rectangular Exterior Body
- 1b: First Side Wall (Side Wall)
- 1c: First Side Wall (Side Wall)
- 2: Sealing Plate
- 3: Electrode Body
- 4: Positive Electrode Plate
- 4b: Positive Electrode Tab
- 4c: Protective Layer
- 5: Negative Electrode Plate
- 5b: Negative Electrode Tab
- 5e: One End of Negative Electrode Plate
- 8: Positive Electrode Terminal (Electrode Terminal)
- 9: Negative Electrode Terminal (Electrode Terminal)
- 20: Non-Aqueous Electrolyte Secondary Battery
- 40: Positive Electrode Tab Group (Tab Group)
- 50: Negative Electrode Tab Group (Tab Group)
- 61: First Positive Electrode Current Collector (First Current Collector)
- 62: Second Positive Electrode Current Collector (Second Current Collector)
- 71: First Negative Electrode Current Collector (First Current Collector)
- 72: Second Negative Electrode Current Collector (Second Current Collector)
- 95: Separator

## Claims

1. A non-aqueous electrolyte secondary battery comprising:
an electrode body including a positive electrode plate and a negative electrode plate;
a rectangular exterior body having an opening and accommodating the electrode body;
a sealing plate sealing the opening;
an electrode terminal provided to the sealing plate;
a first current collector disposed between the electrode body and the sealing plate and connected to the electrode terminal;
a second current collector disposed between the electrode body and a side wall of the rectangular exterior body and connected to the first current collector; and
a tab group extending from the electrode body toward the side wall and connected to the second current collector,
the second current collector being made of a flat plate having a surface parallel to the side wall,
the tab group including a positive electrode tab group having a bundle of multiple positive electrode tabs extending from the positive electrode plate and a negative electrode tab group having a bundle of multiple negative electrode tabs extending from the negative electrode plate and being bent near a connection with the second current collector to be parallel to the side wall,
the positive electrode plate including a positive electrode core and a positive electrode active material applied to the positive electrode core, the positive electrode tabs extending from the positive electrode core, a surface of the positive electrode core on and near its end from which the positive electrode tabs extend being covered with a protective layer containing an insulant, and the protective layer being exposed,
the positive electrode plate and the negative electrode plate in the electrode body being stacked with a separator interposed therebetween,
one end of the negative electrode plate facing the protective layer on the positive electrode plate.

2. The non-aqueous electrolyte secondary battery of claim 1, wherein
the positive electrode tab group is located on one end surface of the electrode body, and the negative electrode tab group is located on the other end surface of the electrode body.

3. The non-aqueous electrolyte secondary battery of claim 1 or 2, wherein
an end of the protective layer and one end of the negative electrode plate are spaced at least 0.1 mm apart in plan view.

4. The non-aqueous electrolyte secondary battery of any one of claims 1 to 3, wherein
the positive electrode tabs are partially provided with the protective layer.

5. The non-aqueous electrolyte secondary battery of any one of claims 1 to 4, wherein
the insulant includes an inorganic oxide.
